Europäisches Patentamt

European Patent Office

Office européen des brevets

(11) Publication number: **0 364 198**
**A2**

## (12) EUROPEAN PATENT APPLICATION

(21) Application number: **89310313.5**

(22) Date of filing: **10.10.89**

(51) Int. Cl.⁵: **B60P 3/20**

(30) Priority: **11.10.88 GB 8823790**
**02.02.89 GB 8902255**

(43) Date of publication of application:
**18.04.90 Bulletin 90/16**

(84) Designated Contracting States:
**BE DE ES FR GB IT NL**

(71) Applicant: **YORK TRAILER COMPANY LIMITED**
**Yafforth Road**
**Northallerton North Yorkshire, DL7 8UE(GB)**

(72) Inventor: **Endelin, Claude**
**42, Ter, Route de Mâcon**
**F-71450 Blonzy(FR)**

(74) Representative: **Allen, Oliver John Richard**
**Lloyd Wise, Tregear & Co. Norman House**
**105-109 Strand**
**London, WC2R 0AE(GB)**

(54) **Improvements in and relating to refrigerated vehicles and containers.**

(57) A refrigerated vehicle or container, the load-carrying space of which is divided into compartments by one or more bulkheads is described. Each bulkhead is mounted on a frame which has two sliders secured thereon, one adjacent each longitudinal wall of the load-carrying space. The sliders are slidable along an aperture which extends along a rail secured to each longitudinal wall. The sliders and rails are formed from a plastic material and are dimensioned so that the sliders are a close fit in the apertures. Heat transfer via the rails and sliders is therefore minimised. A rod may be secured to each of the rails, the rods being connected respectively to the positive and negative poles of a power supply. Power may be supplied to electrical devices in the bulkhead by connecting them to conductive members in the sliders which, in use, contact the rods.

## IMPROVEMENTS IN AND RELATING TO REFRIGERATED VEHICLES AND CONTAINERS

This invention relates to refrigerated vehicles such as lorries, trailers, semi-trailers and vans and to containers for such vehicles and in particular to refrigerated vehicles or containers with a load-carrying space which is divided into a number of compartments.

The division of the load-carrying space of a refrigerated vehicle or container is carried out with partitions, normally in the form of an insulating panel, known as bulkheads. The bulkheads may be fixed in position or they may be capable of being secured in a number of different sizes. One design of movable bulkhead had two positions, a vertical position in which it forms the compartments and a horizontal position adjacent the roof in which it can be moved along the load-carrying space. The bulkhead in this arrangement is hinged to struts which connect it to a sliding frame. The hinges and struts co-operate to allow the bulkhead to be moved between two positions. The sliding frame includes slides which can move within rails secured along the longitudinal walls of the load-carrying space when the bulkhead is in the horizontal position, to allow its location within the vehicle or container to be changed.

Bulkheads are provided with seals on all four edges. These are arranged so that when the bulkhead is in the vertical position, the top and bottom seals are compressed between the bulkhead and the roof and floor respectively of the refrigerated vehicle or container. The side seals are not compressed when the bulkhead is swung into the vertical position, rather these are mounted on movable supports which can be forced, by means of locking devices, towards the walls of the load-carrying space to compress the side seals.

In one known arrangement the sliders of the sliding frame comprise wheels, normally in the form of ball-bearings, which move within a C-shaped metal rails secured along the longitudinal walls of the vehicle.

This arrangement is not very efficient at preventing heat transfer between the compartments, in particular both the rails in which the sliding frame moves and the wheels of the sliding frame are metallic and therefore allow heat to transfer from a hotter to a colder compartment. Heat also transfers via the apertures within the rails in which the wheels move. Moreover it is difficult to effectively seal the area in the upper corners of the load-carrying space where the C-shaped metal sections are secured.

The compartments into which the bulkheads divide the load-carrying space, often need to be kept at different temperatures, for example, to allow perishable and frozen goods to be carried in the same vehicle or container. One arrangement for achieving this is to provide an evaporator at one end of the container or vehicle and employ bulkheads which have at least one passage therethrough, each passage containing a fan, the passages being closed by shutters. The compartment in which the evaporator is located is then kept at the coldest temperature and when it is desired to cool one of the other compartments, the passages in the bulkheads between it and the coldest compartment are opened and the fans activated to force cold air from the coldest compartment into that which it is desired to cool. To allow the temperature of a compartment to be raised, the bulkheads may also be provided with a heater, and the passages and fans so arranged that air can be sucked out of the compartment, passed over the heater and returned to the compartment.

The fans require power to drive them as do the heater and the shutters if these are electrically operated and in some known bulkheads this is supplied by means of a coiled cable, known as a "Susie" cable, and socket on the bulkhead, and a series of sockets along the container wall all connected to a power supply. The plurality of sockets is required to allow two or more bulkheads to be supplied with power in a number of positions within the container. This arrangement has several drawbacks. Firstly, it is necessary to unplug and replug the 'susie' cable from the wall sockets each time the bulkhead position is changed. Secondly the 'susie' cable can be snagged on the top of the goods carried in the container resulting in a bad connection or even causing it to break. Thirdly, the provision of the plurality of sockets adds to the expense of the container and the sockets themselves either intrude into the load-carrying space or must be set into the walls of the container which reduces the insulation in these areas.

In a second known arrangement, a cable is permanently connected between the bulkhead and a power supply at one end of the container or vehicle. This arrangement obviates the need for sockets but can only be employed in a vehicle with a single movable bulkhead. Moreover the same problem with regard to snagging occur.

It is the object of this invention to overcome one or more of the problems associated with known bulkheads as described above.

A refrigerated vehicle or container in accordance with the invention has at least one bulkhead for dividing the load-carrying space of the vehicle or container, the bulkhead(s) being mounted on a frame which has two sliders secured thereto, each slider being slidable along an aperture which extends along a rail secured to each of the longitudinal walls of the load-carrying space of the vehicle or container, the sliders and rail being formed from a plastics material and the apertures and sliders being dimensioned so that the sliders are a close fit in the apertures.

The advantage of forming the sliders and rails from plastics material is that the sliders can move easily and smoothly within the apertures but since plastic materials are much worse heat conductors than metal heat losses between the compartments either side of the bulkhead via the sliders and rails are minimised. By making the sliders a close fit with the apertures, the air gap between the two is reduced to a minimum which further reduces heat losses.

In a very preferred embodiment, an electrically conductive rod is secured to each of the rails, one rod being connected to the negative pole of an electrical power supply and the other rod being connected to the positive pole, a conductive member being provided in or on each slider, the conductive members being electrically connected to one or more electrical devices supported on or in the bulkhead, the arrangement being such that when the bulkhead is in a position in which it divides the load-carrying space, each conductive member is in contact with a rod whereby power is supplied to the electrical device(s).

This arrangement has the advantage that it does not include either sockets or cables and therefore does not have the problems associated with these. In particular, power is always automatically supplied to the electrical device when the bulkhead is in the position to form compartments and there is no need to unplug or replug when the bulkhead is to be moved. It is relatively simple in construction and consequently inexpensive.

Advantageously, the rods may be secured within the apertures of the rails, with the sliders suitably dimensioned and shaped so that they do not snag on the rods. This means that the rods are protected from damage, and to a great extent from being touched accidentally and further insulation of the rods is not normally required since the heat insulative materials of which the rails are made is frequently often electrically insulative.

The conductive members suitably take the form of carbon brushes held within an aperture within the slider and biased by a spring such that the brush will contact the rail. The connection between the brush and the electrical device may comprise a cable passing between the two through the slider and the bulkhead.

The electrical device may, for example, be a fan, heater or shutter or a plurality of one or more of these.

Preferably the bulkhead is arranged so that it can be moved between a horizontal position in which it can be moved lengthwise down the container and a vertical position in which it forms the compartments.

Preferably the sliders are so dimensioned that when the bulkhead is in the vertical position, a part of each of the sliders is in the aperture of that part of the rails immediately adjacent the bulkhead. In some known arrangements, when the bulkhead is in the vertical position, the sliders are a distance in front of the bulkhead so that the aperture in the portion of the rail adjacent the bulkhead is open. By dimensioning the slider so that it is adjacent the bulkhead when the bulkhead is vertical a source of substantial heat losses is eliminated.

Suitably the bulkhead comprises a panel of insulating material, seals being provided along each edge of the panel. The seals may be formed from rubber and be carried by metal support mounted to the bulkhead.

The bulkhead is preferably dimensioned so that when it is in the vertical position, the top and bottom seals are compressed but the side seals are not. The side seals are therefore suitably provided with supports which can be moved relative to the bulkhead to compress the seals.

Suitably the rails are secured in the upper corners of the load space and are configured so that, when in place, each of the upper corners has a smooth curved profile. This allows the seals to fit closely against the rails and adjacent portions of the load space. With the plastics materials from which the rails are made this is simple and inexpensive to achieve whereas with the metal rails in known arrangements this would add considerably to the cost.

The invention will now be further described by way of example with reference to the accompanying drawings in which:

Figure 1 is a view from the rear of a part of a refrigerated vehicle or container in accordance with the invention with the bulkhead vertical;

Figure 2 is a front view of the bulkhead of Figure 1;

Figure 3a and 3b are enlarged views of part of the bulkhead of Figure 2;

Figure 4 is a view along IV - IV of the vehicle of Figure 1;

Figure 5 is a similar view to Figure 2 but showing the left-hand section only and with the bulkhead horizontal;

Figure 6 is a view of the seal shown in Figure 5 with the locking device operated;

Figure 7 is an enlarged view of the part of the refrigerated vehicle of Figure 2;

Figure 8 is a simplified front view of a refrigerated vehicle or container in accordance with a preferred embodiment of the invention and

Figure 9 is a partially sectional enlarged view through part of the vehicle or container of Figure 8.

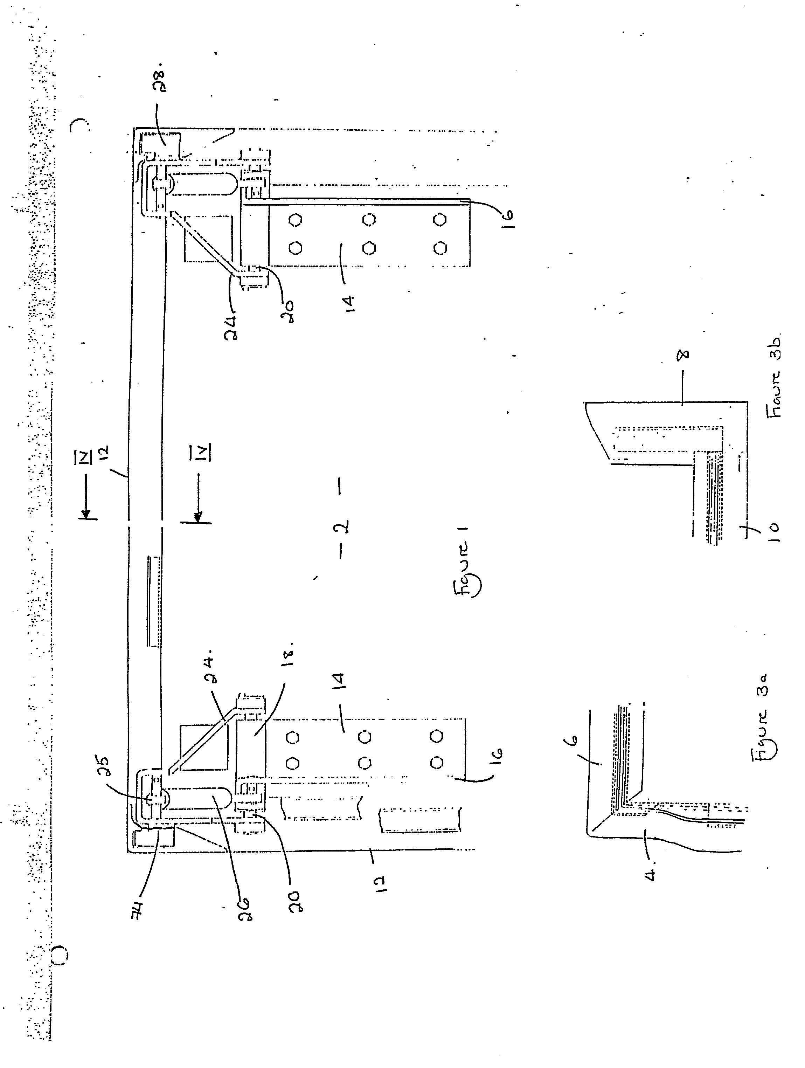

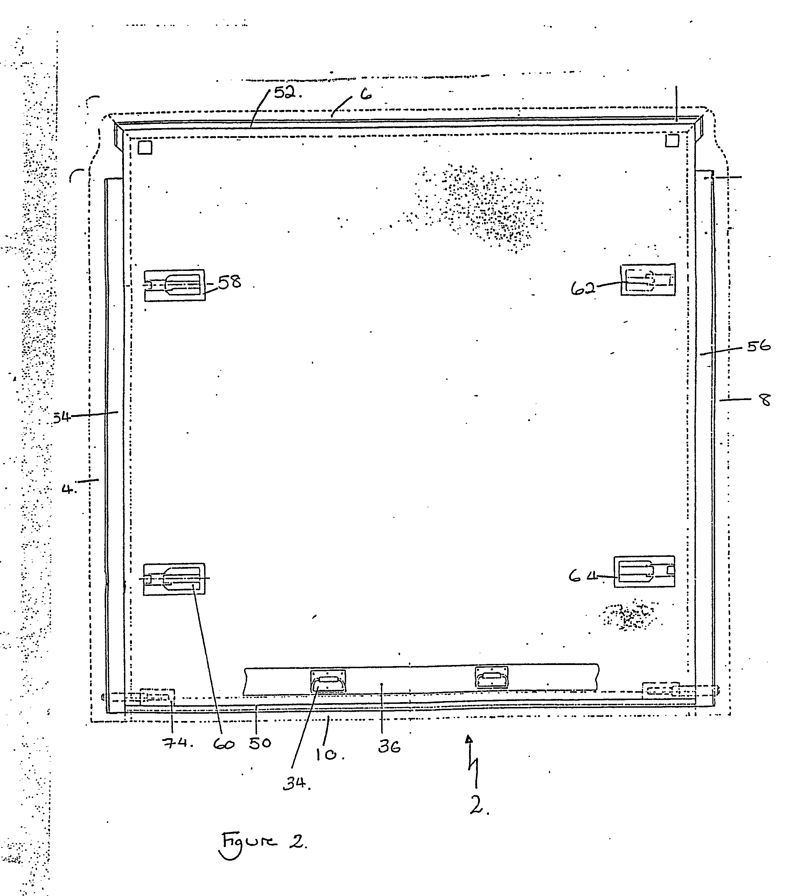

The bulkhead 2 shown in the Figures comprises a panel of insulating material with a skin of metal or plywood secured to each side by adhesive. The skin is itself coated with a glass fibre reinforced polyester to render it waterproof. All four edges of the bulkhead are provided respectively with seals, 4, 6, 8 and 10 which are shown in dotted outline in Figure 2.

The bulkhead 2 is employed to partition the interior of a refrigerated vehicle or container, the perimeter of the load-carrying space of which is indicated at 12 in Figure 1. As shown in Figures 1, 4 and 5 the bulkhead has two aluminium mounts 14 bolted thereto each of which has a triangular portion 16 which extends outwards from the bulkhead. The mounts 14 also include a keeper assembly 18, through which is passed a swivel shaft 20. The bulkhead 2 swivels around these shafts 20 when moving from the horizontal to the vertical position or vice-versa as described below.

To allow the bulkhead to be used to form any desired size of compartment, it is mounted in the refrigerated vehicle or container by two sliding frames 22 which can move lengthwise along the vehicle. Each sliding frame 22 comprises an elongated three sided housing 24 which is secured at one end to each end of the associated swivel shaft 20 (see Figure 1). One end 25 of the strut 26 is secured at its other end to the tip of the triangular extension 16 of the associated mount 14.

The sliding frames 22 also include sliders 28, in the form of rectangular cross-section rods, which are screwed (see 30) to the housings 24. The sliders 28 move within apertures 31 provided in rails 32 which are secured by for example rivets and gluing, see 33, 35, to the upper corners of the load carrying compartment and which extend along the length thereof. The rails 32 and sliders 28 are both formed from materials which are poor conductors of heat, in particular the rails 32 are formed from gloss fibre reinforced polyester whilst the sliders 28 are formed from polyvinyl chloride. These two materials also allow the sliders to move easily within the rails. The rails 32 are suitably formed by pultrusion.

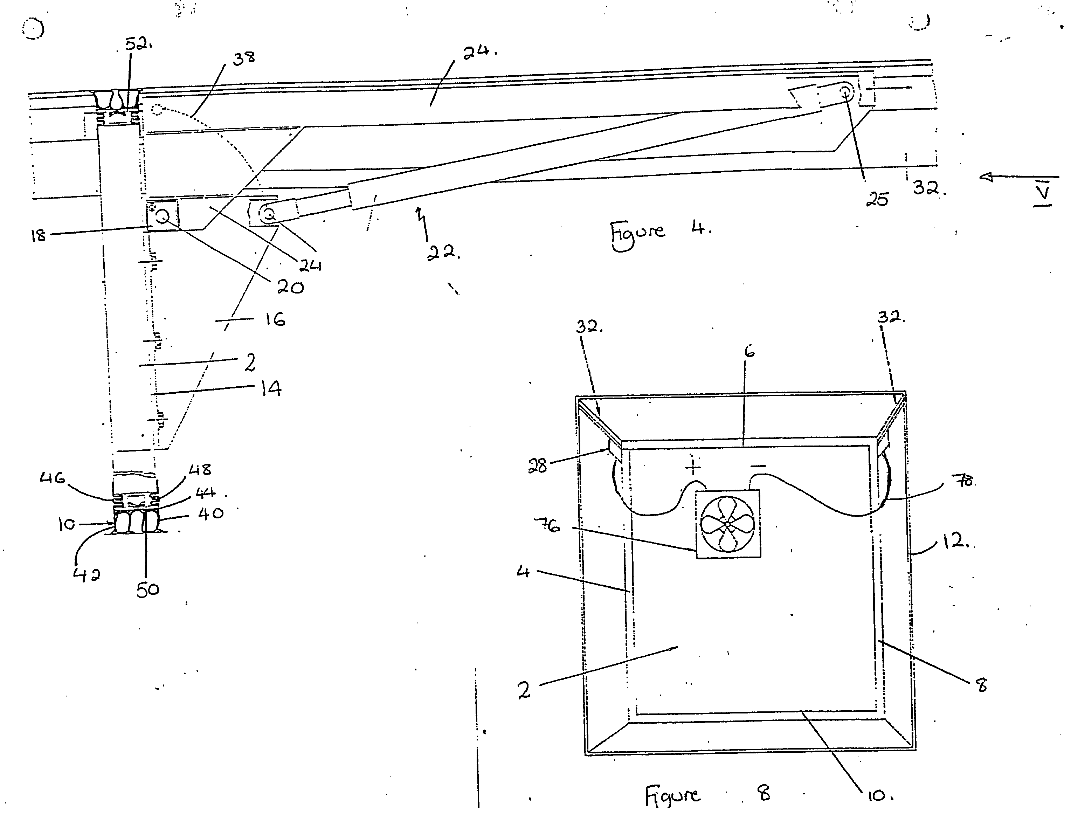

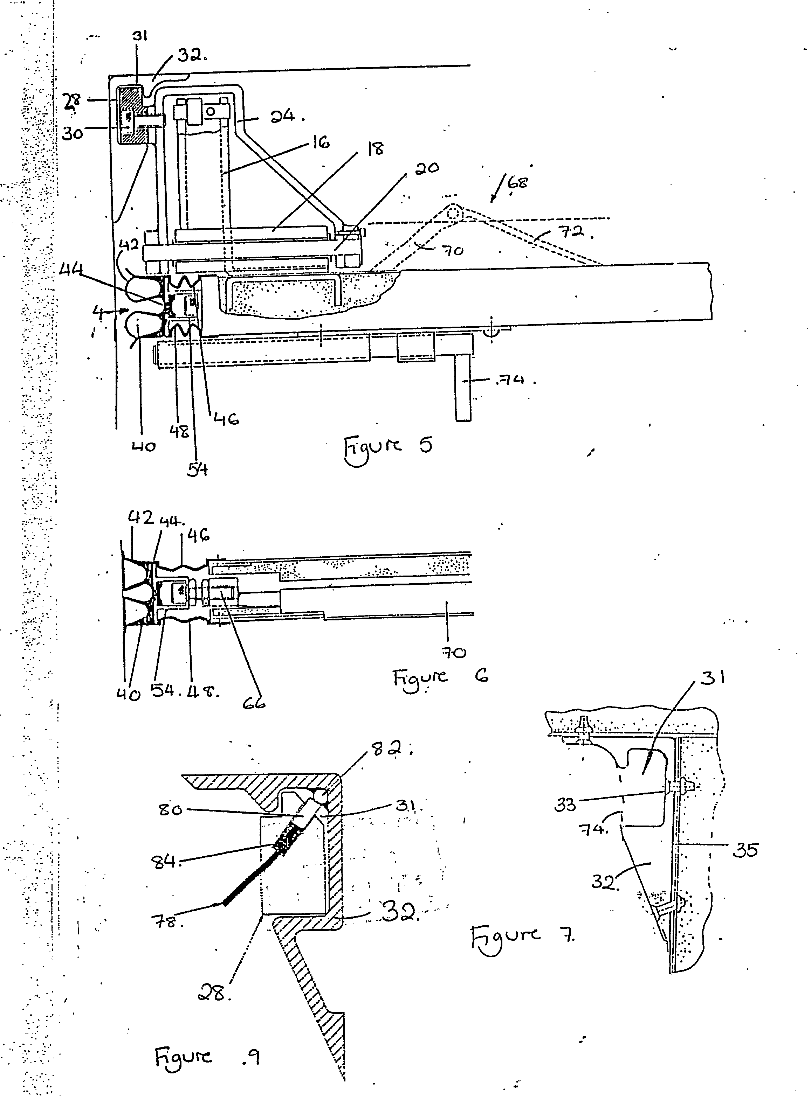

The sliders 28 allow the bulkhead 2 to be moved to any desired position within the vehicle. Movement of the bulkhead 2 is effected when it is in the horizontal position, as shown in Figures 5 and 6 by pushing the bulkhead manually to cause the sliders to move within the apertures.

The bulkhead 2 is moved from the vertical position shown in Figure 4 to the horizontal position by pulling handles 34 provided on kickstrip 36 upwards. The bulkhead 2 rotates around the shafts 20 an the connections between the triangular mount extensions 16 and the struts 26 move along a path indicated by dotted line 38 within the housings 24. The struts 26 extend to allow the rotation of the bulkhead and mount secured thereto. Movement from the horizontal to the vertical position is effected by pulling downwards on the handles.

· The length of the sliders 28 should be such that they extend through the apertures 31 adjacent the bulkhead 2 when the bulkhead 2 is in the vertical position. Furthermore, as can be appreciated from Figure 1 and 5 the sliders 28 and rails 32 are dimensioned so that the sliders 28 are a close fit in apertures 31. The amount of head lost via air gaps between the sliders 28 and rails 32 is therefore minimised.

The upper and lower seals, 6 and 10, of the bulkhead 2 are fixed in place and the dimensions are such that when the bulkhead is rotated into the vertical position they are compressed between the bulkhead and the ceiling and floor.

The seals comprise two parallel spaced tubes 40 and 42 connected by a base portion 44. The base portion 44 is connected to the bulkhead 2 by two spaced zig-zag strips 46,48. The seals are supported by channels 50, 52 which are secured at one end to the bulkhead and at the other to the base portion 44 intermediate the two zig-zag strips 46, 48 which insulate the channels. The seals may be formed in two halves, each half comprising a tube, base portion and a strip. The parts of each half are integral and the seals may be made of rubber.

The side seals 4 and 8 are similar to the end seals 6 and 10 but the supporting channels 54, 56 are not secured directly to the bulkhead rather they can move relative to the bulkhead to ensure effective sealing alon the sides as described below.

The support channels 50, 52, 54 and 56 are in the form of a U channel with the flanges having extensions parallel to the web. The extensions and web can be formed from a plastics material which helps to reduce even further heat transfer via the channels whilst the flanges are generally formed from aluminium to give them sufficient strength.

When the bulkhead is swung into the vertical position the side seals are not compressed. To force them against the sides of the load carrying space, a number of locking devices are provided. In the bulkhead shown in Figure 1, four locking devices 58, 60, 62, 64 are shown, one of which 60 is shown in greater detail in Figure 5 and 6. The device 60 comprises a locking shaft 66 movable within a channel in the bulkhead which is secured at one end to the aluminium support channel 54. At the other end the shaft 66 is pivoted to an actuating handle 68 which comprises two hinged member 70 and 72 which in the unlocked position lie at an angle to each other. The unhinged end of member 72 is secured to the bulkhead. When the actuating handle 68 is pushed down against the bulkhead to align members 70 and 72, the shaft 66 moves to the left to force the channel 54 and seal 4 towards the wall of the load carrying space and compress the tubular portions 40 and 42 into a generally triangular shape to seal the sides of the bulkhead. The bulkhead may be locked in positin with bolts 74, holes being provided at intervals for this purpose along the wall of the load-carrying space.

The connections between the end and side seals are shown in Figures 3a and 3b. The upper seal 6 and the side seals 4 and 8 are tucked and glued together to make a seam at 45 degrees to the horizontal. This ensures that the top corners are always square. The bottom seal 10 is tucked and bonded inside the side seals. It will be appreciated that the top corners will be forced against the rails 32 when the bulkhead is vertical. To ensure good sealing in this region the shape of the rails and sliders is arranged to give as smooth a profile as possible, see dotted outline 74 in Figures 2 and 7, so that there are no gaps between the seals and the rails.

As noted above, the rails are preferably made by a pultrusion process. This is the best and most inexpensive way to acheive the desired rail profile. Furthermore the direction of the reinforcement can be arranged to provide strength along the length of the rails.

The bulkhead 2 shown in Figure 8 in the vertical position includes a fan 76 which is located in a passage which extends through the width of the bulkhead. The fan 76 is employed to pass air from a compartment on one side of the bulkhead 2 to that on the other. An evaporator is normally provided in one compartment of the vehicle or container and the fans 76 allow the other compartments to be cooled by passage of air from the compartment with the evaporator.

To supply power to the device, two electrical cables 78 are connected to the fan 76, each of which extends from the fan to one of the sliders 28 of the bulkhead as shown in greater detail in Figure 9 which is a partially sectional view through the slider and rail at one corner of the trailer or container of Figure 8. Passages are preferably provided within the bulkhead for the cables or alternatively conduits for the cables can be secured to the surface of the bulkheads. However this may not be necessary and in some cases the cables can simply lie against the bulkhead and can be secured thereto by, for example, clips if necessary.

Each cable 78 passes into an aperture in the appropriate slider 28 and is there connected to one end of a carbon brush 80, the other end of which extends above the slider 28.

An electrically conductive rod 82 is secured within each aperture 31 of the rails 32. One of the rods 82 is connected to the positive pole of an external power supply, for example, the power supply of the evaporator of the refrigerated vehicle or an auxiliary supply, the other rod being connected to the negative pole. As shown in Figure 2, the sliders 28 and brushes 80 are dimensioned so that the free ends of the brushes 80 are closely adjacent the rods 82. A spring 84 held within the brush aperture of the slider 28 urges the brush 80 into contact with the rod 82. Thus power is always supplied to the fan 76, no matter where the bulkhead is positioned.

The rails 32 as discussed above are formed of a thermally insulative material. Such materials are normally also electrically insulative and no further insulation is therefore required for the rods 82. Moreover the rails 32 protects the rods 82 from damage and from being accidentally touched.

The arrangement therefore allows for a continuous power supply to the fan 76 without the need for sockets or cables which have to stretch over the goods with consequent danger or damage. Moreover, the arrangement can of course be used to supply power to other devices as well as, or in place, of the fan, for example, a heater or shutters.

The bulkhead described above can further be easily moved within the refrigerated vehicle and is arranged to minimise the heat losses between the compartments which it forms specifically those which have been found to occur in know arrangements due to the apparatus provided to allow movement of the bulkhead along the container or vehicle.

## Claims

1. A refrigerated vehicle or container having at least one bulkhead for dividing the load-carrying space of the vehicle or container, the bulkhead being mounted on a frame which has two sliders secured thereto, one adjacent each longitudinal wall of the load-carrying space of the vehicle or container, each slider being slidable along an aperture which extends along a rail secured to each of the longitudinal wall, the sliders and rails being formed from a plastic material and being dimensioned so that the sliders are a close fit in the apertures.

2. A refrigerated vehicle or container as claimed in Claim 1 wherein an electrically conductive rod is secured to each of the rails, one of the rods being connected to the negative pole of an electric power suppy and the other being connected to the positive pole, a conductive member being provided in or on each slider, the conductive members being electrically connected to one or more electrical devices supported on or in the bulkhead, the arrangement being such that when the bulkhead is in a position in which it divides the load-carrying space, each conductive member is in contact with a rod whereby power is supplied to the electrical device(s).

3. A refrigerated vehicle or container as claimed in Claim 2 wherein the rods are secured within the apertures provided in the rails.

4. A refrigerated vehicle or container as claimed in either Claim 2 or Claim 3 wherein the conductive members comprise carbon brushes held within an aperture provided in the slider with one end protruding above the surface of the slider and in contact with one of the rods.

5. A refrigerated vehicle or container as claimed in Claim 4 wherein the carbon brushes are biased by a spring towards the rods.

6. A refrigerated vehicle or container as claimed in any one of Claims 2 to 5 wherein the electrical device comprises one or more fans and/or heaters and/or electrically operated shutters.

7. A refrigerated vehicle or container as claimed in any preceding Claim wherein when the bulkhead is in a position to divide the load-carrying space, the sliders extend through the portion of the apertures immediately adjacent the bulkhead.

8. A refrigerated vehicle or container as claimed in any preceding Claim wherein the rails are secured in the upper corners of the load-carrying space.

9. A refrigerated vehicle or container as claimed in Claim 8 wherein the rails are configured so that the profile of the upper corners of load-carrying spaces is smoothly curved.

10. A refrigerated vehicle or container as claimed in any preceding Claim wherein the sliders comprise rectangular cross-section rods.

EP 0 364 198 A2

Figure 1

Figure 3a

Figure 3b

Figure 2.

Figure 4.

Figure 8

Figure 5

Figure 6

Figure 9

Figure 7